# EUROPEAN PATENT SPECIFICATION

(11) **EP 1 653 094 B1**
(45) Date of publication and mention of the grant of the patent: **10.10.2007**
(21) Application number: 03740495.1
(22) Date of filing: 07.07.2003
(51) Int. Cl.: F16C 11/06, B62D 7/16, B60G 7/00, B60G 21/055

(54) **KNUCKLE WITH THERMAL PROTECTOR**
GELENK MIT WÄRMESCHUTZ
ROTULE A PROTECTION THERMIQUE

(43) Date of publication of application: 03.05.2006
(73) Proprietor: ZF FRIEDRICHSHAFEN AG, 88046 Friedrichshafen (DE)
(72) Inventor: IZQUIERDO NUNEZ, José, Ramón, 09007 BURGOS (ES); CANIBANO ALVAREZ, Esteban, 24100 VILLABLINO (León) (ES); TEIJEIRO CASTRO, Rafael, 09007 BURGOS (ES)
(74) Representative: Carpintero Lopez, Francisco
(86) International application number: PCT/ES2003/000337
(87) International publication number: WO 2005/005848

(56) References cited:
- EP-A1- 0 570 736
- EP-A1- 0 658 469
- WO-A1-02/101250
- US-A- 3 021 157
- US-A- 4 582 180
- US-A- 5 100 254
- US-A- 5 484 218

## Description

### OBJECT OF THE INVENTION

The present invention refers to a ball joint of the type used in vehicle suspension and steering systems or stabilizers bars fitted with a dust boot to prevent the entry of dirt.

It is the object of the invention that the ball joint should incorporate an integrated thermal protector that will minimize the transmission of heat to the interior of the ball joint, in particular the heat generated by the brakes of the vehicle in order to prevent the rubber dust boot or cover from being damaged by the high temperatures generated in the surrounding area.

It is also an object of the invention that the thermal protector should be perfectly integrated in the ball joint with the additional assistance of a connecting ring, affixed previously to the dust boot on which the protector is suitably attached.

### BACKGROUND OF THE INVENTION

On vehicle suspension and steering systems it is common to make use of ball joints to interconnect components in such a way that they facilitate the angular variations that take place in the relative movement between these components.

The ball joints comprise a swivel housing fitted with means for coupling to a first component of the suspension for instance, and they are provided with a housing in which there is a bush accommodating the ball head of the knuckle stem, which is in turn extended in an upper section linked to a second component, in relation to which the first component undergoes angular variations.

Suspension ball joints are located in a position very close to the brake disc, so that the heat generated by the braking action is transmitted to the sector where the ball joint is located.

The ball joint normally incorporates a rubber cover or dust boot that is not able to withstand continuous high temperature of more than 85°C or temperature peaks above 100°C.

Disc brakes, however, may easily reach 500°C and the heat given off may therefore eventually break down the rubber or dust boot impairing its function, with the result that the cover is unprotected and the failure of the ball joint may take place in a short time.

In order to prevent the dust boot from acquiring high temperatures disc brakes are fitted with heat shields consisting essentially of a large-sized plate that covers the whole of the disc brake.

Another possible solution currently implemented consists of using heat protectors for the ball joint formed of a discrete part fitted independently of the ball joint.

WO-A-02/101250 discloses an arrangement comprising, inter alia, the features according to the preamble of claim 1.

The optimization of the means used for the protection of the ball joint from heat make the invention described below feasible.

### DESCRIPTION OF THE INVENTION

The invention is defined in claim 1. Further features are disclosed in the dependent claim.

The ball joint with integrated thermal protector proposes a clearly satisfactory solution in comparison with other solutions adopted previously in terms of functional efficacy, installation and reduction of costs.

The use of this ball joint with thermal protector reduces costs considerably in relation to the use of shields on the disc brakes, not only because it is the case of a protection element of smaller size and weight, but also due to the reduction in installation operations and in the number of components.

Furthermore, the thermal protector has an added feature in that it acts as a means of protection against the damage that the ball joint might suffer during handling, as it replaces the plastic cap normally used for this purpose.

Integration of the thermal protector in the ball joint is therefore the basic object of this invention, since it is designed to cover the dust boot normally fitted to the ball joint, which is provided with a connecting ring that is fixed to the dust boot beforehand and on which the thermal protector is attached.

For its part the dust boot consists of a rubber cover which is normally fitted on an upper shoulder of the ball joint swivel housing and is extended upwards with sinuous forms as far as an upper neck which closes around an upper section of the knuckle stem.

The connecting ring may be injected on the neck of the dust boot, being an ideal solution for facilitating the subsequent installation of the protector, as the assembly made up of the dust boot and pre-fitted ring will be received ready formed from the elastomer manufacturer.

In another possible embodiment the ring is press-fitted and/or glued onto the neck of the dust boot.

The thermal protector consists of a body of suitable geometry partly open in one sector of its side face and on its top face it presents a series of flexible radial plates which define a circular opening interiorly.

Upon inserting the protector in the ring from its top face, the plates flex slightly at their inner edges until they pass over some tabs defined on the side face of the ring and they are engaged between the tabs and the base of the ring. In this way the protector is coupled on the ring which had been attached previously to the dust boot.

The protector thus fitted covers the dust boot, preventing it from reaching excessively high temperatures.

### DESCRIPTION OF THE DRAWINGS

To supplement the description being given and to make it easier to appreciate the features of the invention, in accordance with a preferred specimen practical embodiment of same, the present descriptive report is accompanied as an integral part hereof by a set of drawings wherein, for informative but never restrictive purposes, we have represented the following:

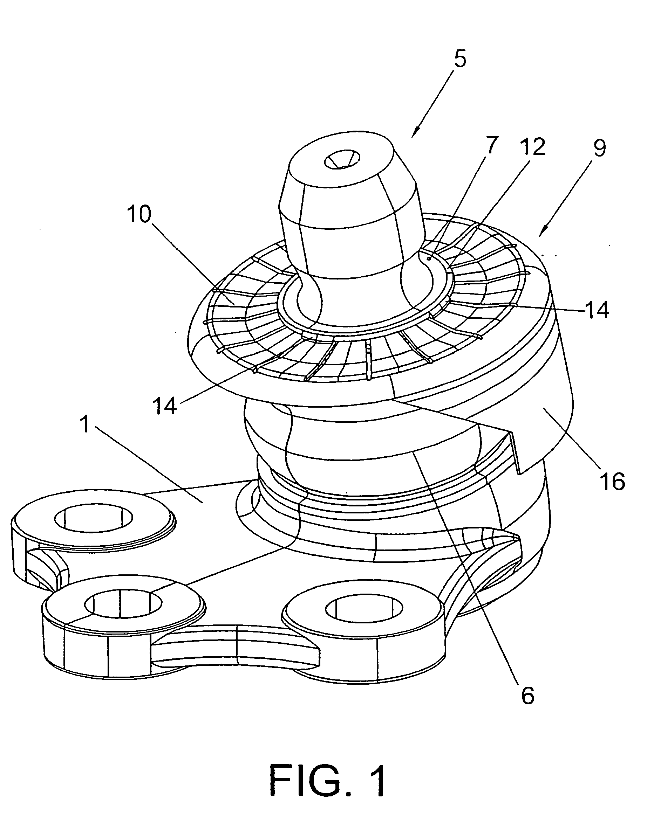

Figure 1.- It shows a perspective view of the ball joint with thermal protector.

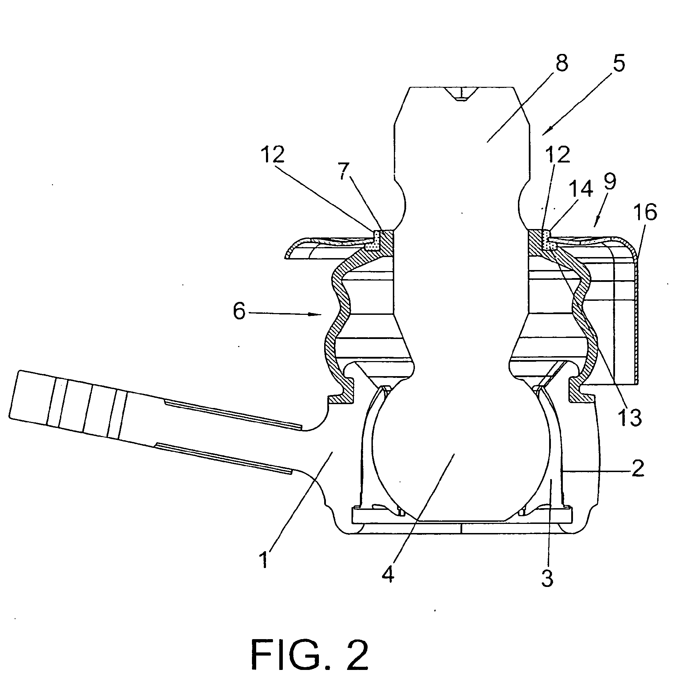

Figure 2.- It shows a sectional side view of the ball joint with thermal protector.

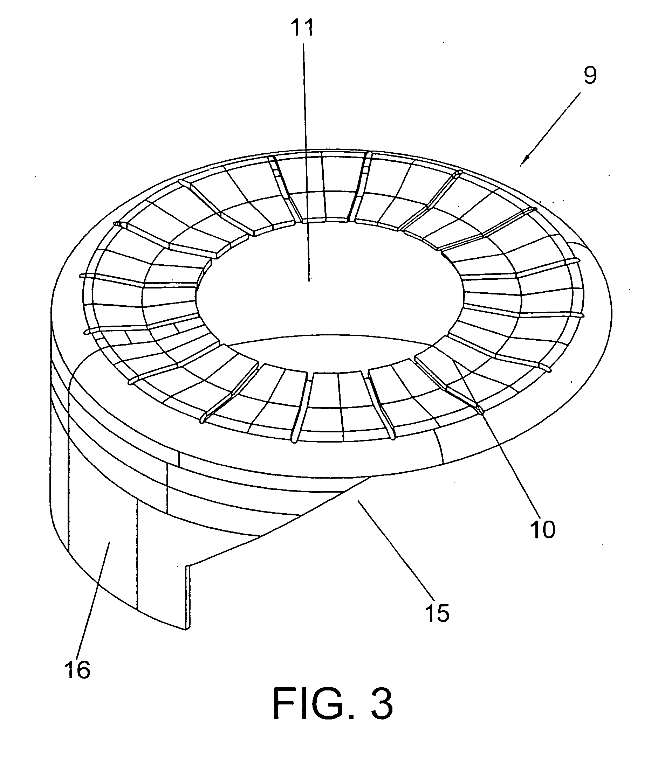

Figure 3.- It shows a perspective view of the thermal protector.

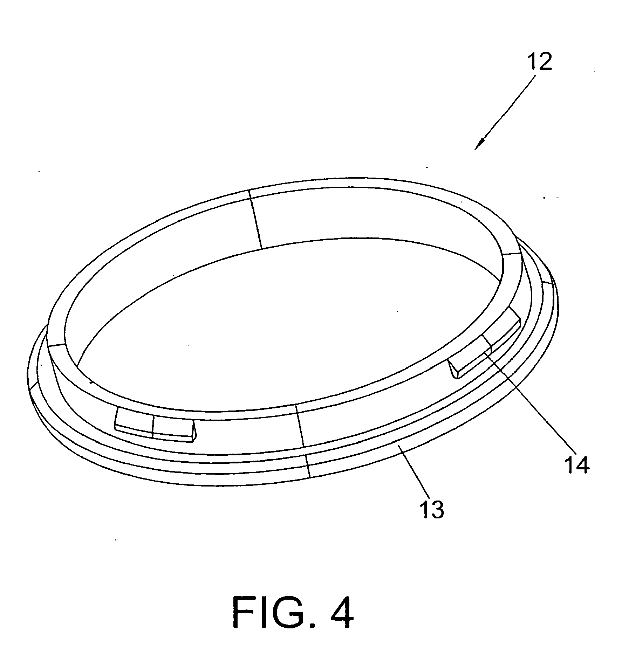

Figure 4.- It shows a perspective view of the connecting ring.

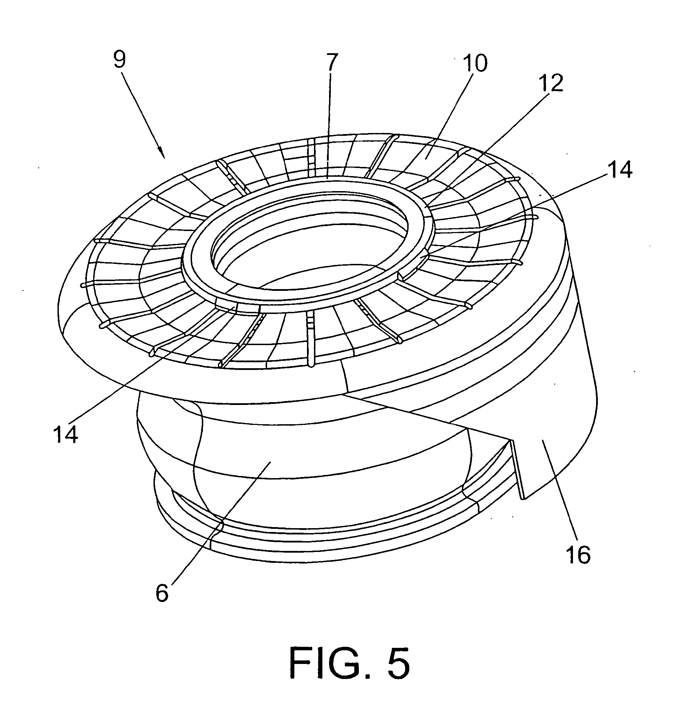

Figure 5.- It shows a perspective view of the protector, ring and dust boot.

### PREFERRED EMBODIMENT OF THE INVENTION

In the light of the figures we may observe the ball joint with thermal protection that is of application to vehicle suspension and steering systems or stabilizer bars which are located in close proximity to a source of excessive heat generation such as a brake, and which starts from the basic incorporation of a swivel housing (1) on which one of the suspension or equivalent components is coupled and which presents in its interior a housing (2) accommodating a bush (3) which rests and turns in sliding contact on a ball head (4) of a knuckle stem (5), provided with dust boot (6) linked by way of its base to the swivel housing (1) and by its neck (7) to an upper section (8) of the knuckle stem (5).

Starting from this basic configuration the most noteworthy feature of the ball joint is the inclusion of a thermal protector (9) integrated in the ball joint presenting a horizontal upper face that incorporates a series of flexible radial plates (10) which define a circular opening (11) interiorly that is coupled on a connecting ring (12) attached beforehand to the neck (7) of the dust boot (6) by overinjection or pressure and/or gluing, so that the thermal protector (9) covers the dust boot (6) to protect it from the high temperatures generated in the surrounding area.

The connecting ring (12) presents a base (13) and a side face projecting from which there is a series of tabs (14) on which the plates (10) of the upper face of the thermal protector (9) are pressed when the thermal protector (9) is fitted, until the plates (10) pass over said tabs (14) and are engaged between the tabs (14) and the base (13) of the connecting ring (12).

The thermal protector (9) is executed in suitable material to withstand the temperatures and mechanical stress and takes the form of a hood which extends initially in the horizontal upper face and is prolonged inferiorly by way of sloping side edges that terminate in vertical walls (16) defining a spacious cutaway (15) that leaves the dust boot (6) practically exposed in the sector opposite the sector of the ball joint facing the heat source. Said vertical walls (16) are separated from the dust boot (6) defining an air chamber between both which produces the thermal insulation of the dust boot (6).

## Claims

1. Ball joint with thermal protection which is of application to suspension and steering systems or stabilizer bars which are located in the vicinity of a source of excessive heat generation such as a brake and which starts from the basic incorporation of a swivel housing (1) on which one of the suspension components or equivalent is attached and which presents in its interior a housing (2) accommodating a bush (3) which rests and turns in sliding contact on a ball head (4) of a knuckle stem (5), provided with a dust boot (6) linked by way of its base to the swivel housing (1) and by its neck (7) to an upper section (8) of the knuckle stem (5), and with a thermal protector (9) integrated in the ball joint protecting the dust boot (6) from high temperatures generated in the surrounding area, wherein the ball joint incorporates a connecting ring (12) which has been previously linked to the neck (7) of the dust boot (6) by overinjection or pressure and/or gluing, and wherein the thermal protector (9) presents a horizontal upper face defining interiorly a circular opening (11) which is fixed to the connecting ring (12),
**characterised in that**
the connecting ring has a base (13) and a side face from which there project a series of tabs (14),
**in that**
the horizontal upper face of the thermal protector is provided with a series of flexible radial plates (10) that define interiorly said circular opening (11),
and **in that**
said horizontal upper face is fixed to the connecting ring by pressure of the plates (10) on the tabs (14) until they pass over them, with the result that said plates (10) are engaged between the tabs (14) and the base (13) of the connecting ring (12).

2. Ball joint with thermal protector (9) according to claim 1 **characterised in that** the thermal protector (9) takes the form of a hood which extends initially in the horizontal upper face and is prolonged inferiorly by way of sloping side edges which terminate in vertical walls (16) defining a spacious cutaway (15) which leaves the dust boot (6) partly exposed in the sector opposite the sector of the ball joint facing the heat source, said vertical walls (16) being separated from the dust boot (6) defining an air chamber between both which produces the thermal insulation of the dust boot (6).

## Patentansprüche

1. Ein Kugelgelenk mit thermischem Schutz zur Anwendung für Aufhängungs- und Lenksysteme oder Stabilisierungsstangen in der Nähe einer Quelle mit exzessiver Wärmeentwicklung wie zum Beispiel einer Bremse, beginnend mit der Aufnahme eines Drehgehäuses (1) als Grundlage, an dem die Aufhängungskomponenten oder Gleichwertiges befestigt sind und das im Inneren aus einem Gehäuse (2) mit einer Buchse (3) besteht, das auf dem Kugelkopf aufliegt und das sich im gleitenden Kontakt auf dem Kugelkopf (4) eines Gelenkstamms (5) bewegt, der mit einer Staubabdeckung (6) verbunden ist, die mittels ihres Unterteils mit dem Drehgehäuse (1) und über ihren Hals (7) mit dem oberen Teil (8) des Gelenkstamms (5) verbunden ist und die zusammen mit der thermischen Schutzvorrichtung (9) in das Kugelgelenk integriert ist, das die Staubabdeckung (6) vor hohen Temperaturen schützt, die durch die Umgebung erzeugt werden, wobei das Kugelgelenk über einen Verbindungsring (12) verfügt, der zuvor mit dem Hals (7) der Staubabdeckung (6) mittels übermäßiger Einspritzung oder Druck und/oder Verleimung verbunden wurde, und wobei die thermische Schutzvorrichtung (9) eine horizontale obere Fläche darstellt, die im Inneren eine kreisförmige Öffnung (11) definiert, die mit dem Verbindungsring (12) verbunden ist, **dadurch gekennzeichnet, dass**
der Verbindungsring über eine Basis (13) und eine Seitenfläche verfügt, aus der eine Reihe von Streifen (14) hervorstehen, dabei ist die horizontale obere Fläche der thermischen Schutzvorrichtung mit einer Reihe flexibler Radialplatten (10) versehen, die die besagte kreisförmige Öffnung (11) im Innenraum bestimmen, und wobei die besagte horizontale obere Fläche an dem Befestigungsring durch den Druck befestigt wird, den die Platten (10) auf die Streifen (14) so lange ausüben, bis sie diese überschritten haben, mit dem Ergebnis, dass die besagten Platten (10) zwischen den Streifen (14) und der Basis (13) des Verbindungsrings (12) arretiert sind.

2. Eine Kugelverbindung mit einer thermischen Schutzvorrichtung (9) gemäß Anspruch 1, **dadurch gekennzeichnet, dass** die thermische Schutzvorrichtung (9) in Form einer Haube ausgeführt ist, die zu Beginn in die horizontale obere Fläche hineinragt und dann mittels geneigter seitlicher Enden, die als vertikale Wände (16), die einen geräumigen Ausschnitt (15) bestimmen, ausgeführt sind, so nach unten geführt werden, dass die Staubhaube (6) in dem Abschnitt gegenüber dem Bereich des Kugelgelenks, das sich gegenüber der Wärmequelle befindet, teilweise exponiert ist, wobei die besagten vertikalen Wände (16) von der besagten Staubkammer (6) getrennt sind und eine Luftkammer zwischen beiden bilden, die für die Wärmeisolierung der Staubhaube (6) sorgt.

## Revendications

1. Rotule à protection thermique applicable aux systèmes de suspension et de direction ou barres stabilisatrices situés à proximité d'une source de génération thermique excessive telle qu'un frein et qui démarre par l'intégration de base d'un logement pivotant (1) sur lequel l'un des composants de la suspension ou équivalent est fixé et qui présente à l'intérieur un logement (2) accueillant une bague (3) reposant et tournant en contact coulissant sur une tête de rotule (4) d'une tige de rotule (5), dotée d'un pare-poussière (6) relié au moyen de sa base au logement pivotant (1) et par son collet (7) à une partie supérieure (8) de la tige de rotule (5), et avec une protection thermique (9) intégrée dans la rotule protégeant le pare-poussière (6) des hautes températures générées dans la zone environnante, dans laquelle la rotule intègre une bague de raccord (12) qui a été précédemment raccordée au collet (7) du pare-poussière (6) par surinjection ou pression et/ou collage, et dans laquelle la protection thermique (9) présente une face supérieure horizontale définissant à l'intérieur une ouverture circulaire (11) fixée à la bague de raccord (12), **caractérisée en ce que**:
- la bague de raccord comprend une base (13) et une face latérale à partir de laquelle une série de languettes (14) font saillie; **en ce que**
- la face supérieure horizontale de la protection thermique comprend une série de plaques radiales flexibles (10) définissant à l'intérieur ladite ouverture circulaire (11) ;
et **en ce que:**
- ladite face supérieure horizontale est fixée à la bague de raccord par pression des plaques (10) sur les languettes (14) jusqu'à ce qu'elles passent au-dessus d'elles, moyennant quoi lesdites plaques (10) sont engagées entre les languettes (14) et la base (13) de la bague de raccord (12).

2. Rotule dotée d'une protection thermique (9) selon la revendication 1, **caractérisée en ce que** ladite protection thermique (9) a la forme d'un capuchon qui s'étend initialement dans la face supérieure horizontale et est prolongé dans la partie inférieure au moyen de bords latéraux inclinés qui se terminent en parois verticales (16) définissant une découpe spacieuse (15) qui laisse le pare-poussière (6) partiellement exposé dans le secteur opposé au secteur de la rotule qui fait face à la source de chaleur, lesdites parois verticales (16) étant séparées du pare-poussière (6) définissant une chambre à air entre les deux qui produit l'isolation thermique du pare-poussière (6).
